# EUROPEAN PATENT APPLICATION

(11) **EP 3 471 109 A1**
(43) Date of publication of application: **17.04.2019**
(21) Application number: 17810437.8
(22) Date of filing: 06.06.2017
(51) Int. Cl.: G21F 3/00

(54) **TRANSPARENT NEUTRON SHIELDING MATERIAL**

(30) Priority: 09.06.2016 JP 2016115558
(71) Applicant: Mitsubishi Chemical Corporation, Tokyo 100-8251 (JP); CO.LTD.RSC, Sinjuku-ku, Tokyo 160-0004 (JP)
(72) Inventor: WATANABE Yuusuke, Tokyo 100-8251 (JP); ITOU Akihiro, Tokyo 100-8251 (JP); SHINMURA Takaya, Tokyo 100-8251 (JP); HASHIMOTO Teruo, Tokyo 160-0004 (JP); KISHIMOTO Takaaki, Tokyo 160-0004 (JP)
(74) Representative: Beckmann, Claus
(86) International application number: PCT/JP2017/021555
(87) International publication number: WO 2017/213265

(57) **Abstract**

Provided is a neutron shielding material having excellent transparency and high neutron shielding ability. In this neutron shielding material, light transmittance at wave length of 400 to 700nm is 80% or greater, and the thickness of a 1/10 divalent layer of a neutron generated from Californium 252 is 14cm or less.

## Description

### FIELD OF THE INVENTION

The present invention relates to a neutron shielding material which has excellent transparency.

### DESCRIPTION OF THE PRIOR ART

Along with the growth of an atomic energy industry, it is becoming a very important theme to shield neutrons generated from facilities such as nuclear facilities e.g. a nuclear reactor or a fast breeder reactor or from facilities for medical neutron treatment and to protect an operator from a damage by neutron. At the same time, for an operator who works in a hot laboratory or hot cell, it is very important theme from the view point for the promotion of working efficiency that the neutron shielding material has transparency.

Because the neutron beam is characterized that energy dependency of conversion factor of radiation dose is very large, fast neutron beam, whose energy is high, has very high influence on external exposure of a human body. Therefore, by shielding effectively the fast neutron beam, it becomes possible to reduce external exposure by neutron beam. For the purpose to shield fast neutron beam, it is well known that the moderation by elastic scattering of light weight atom such as hydrogen atom, and a materials highly containing hydrogen is conventionally used as a neutron shielding material. For a neutron shielding material, it is very important to be cheap and to be easy handling, and is known that neutron energy is lost by elastic scattering. Accordingly, since an atom whose atomic number is relatively lower is effective, a hydrocarbon compounds whose containing numbers of hydrogen atom is relatively high (such as paraffins, polyethylene resin, epoxy resin or acrylic resin) are used and applied as a structural parts for a radiation shielding material.

Especially, an epoxy resin has an advantage that a molding by casting method is possible and is possible to secure necessary thickness as a shielding material by one body molding method.

Patent Document 1 relates to an epoxy resin composition including a nano-size radioactive radiation shielding material and having good superior shielding effects for against radiation, and to a method for preparing same. In particular, the present invention relates to a method for preparing the epoxy resin composition for neutron shielding, comprising the steps of; a step of mixing a boron compound powder for absorbing neutrons, optionally a high density metal powder for shielding from against gamma-rays and a flame retardant powder, respectively separately or in combination, with an amine-based curing agent to obtain a mixture of a curing agent and a powder; an ultrasonic wave treating step of applying ultrasonic waves to the mixture to coat the surface of the powder with the amine-based curing agent to disperse the powder in the curing agent; and a dispersing step to mixing and dispersing the amine-based curing agent, that was dispersed and includes the powder treated with ultrasonic waves, in an epoxy resin.

However, there is no mention referring to transparency of a neutron shielding material in this patent Document.

An example which uses transparent epoxy resin as a neutron shielding agent is disclosed in Patent Document 2, however, there is only a disclosure reciting "Transparency of a cured substance is generally measured by illuminance. For example, in a case that a cured substance is applied as a front of a special car, it is necessary to be maintained within the prescribed illuminance in the road traffic control law. In this invention, when the illuminance is kept over 50% under the adequate light source, it is judged that the transparency is properly maintained." According to this disclosure, mentioned method is not the method prescribed in ordinary method, for example, JISK7361 etc., which measures transparency of materials, therefore, transmissivity for each wave length range is not indicated.

### Prior Art Documents

### Patent Documents

Patent Document 1: JP 2014-514587 publication
Patent Document 2: JP 2001-310928 publication

### DISCLOSURE OF THE INVENTION

### OBJECT TO BE DISSOLVED BY THE INVENTION

Recently, along with the improvement of combustion efficiency of nuclear fuel or along with the use of MOX fuel, neutron beam radiation doses from used nuclear fuel are becoming to increase.

In a case of a panel material for a hot laboratory or a hot cell which are used for a reprocessing equipment of used nuclear fuel, although it is a shielding materials, transparency is required because it is necessary to observe inside view when a manipulator is used. Accordingly, the subject of this invention is to develop a shielding materials which has superior in shielding efficiency and also has excellent transparency compared with the conventional neutron shielding materials. When such an excellent transparent shielding materials is developed, it can be applied for a panel materials of an equipment which treats a radiation source releasing fast neutron beam such as high burn up used nuclear fuel containing high amount of spontaneous nuclear fission component, further, reduction of external exposure of operators becomes possible.

As a neutron shielding material, various materials, such as metal materials, inorganic materials or high polymer materials which contains high amount of hydrogen are researched and becomes to be used practically. In this research, since high polymer materials is not only a materials containing high amount of hydrogen but also is excellent in transparency and is possible to produce a molded subject of relatively large size, development is carried out by limiting an object of the development to high polymer materials. Especially, a target of the present invention is narrowed down to the development of a neutron shielding material using an epoxy resin, namely, the epoxy resin, is applied to a glove-box that treats a nuclear fuel, has similar transparency with an acrylic resin which is typical transparent neutron shielding material having over 90% light transmissivity at visible radiation range, and is excellent in mechanical rigidity and in neutron shielding ability compared with an acrylic resin.

That is, the object of the present invention is to provide a transparent neutron shielding material at visible radiation range. By the present invention, under exposure of radiation it becomes possible to observe blue to violet range view without coloration, therefore, not only the observation of inner operation domain can be done by full color, but also blue color of Cerenkov radiation can be observed accurately, that is, accurate observation under exposure of radiation becomes possible.

Further, in view of using condition of the neutron shielding material, it is necessary to obtain relatively thick thickness and large molded goods.

### MEASURE TO DISSOLVE THE OBJECT

The inventors of the present invention continued earnest study about epoxy resin, made researches to develop an epoxy resin composition having transparency also having neutron shielding effect, and found out that the transparent epoxy resin composition having neutron shielding effect can be obtained by combining a specific epoxy resin with a curing agent, then accomplished the present invention.

That is, as mentioned below, the present invention is to provide a curable epoxy resin composition, a cured subject thereof and a producing method thereof.

The important factors of the present invention are;
(1) A neutron shielding material whose light transmittance at wave length of from 400 nm to 700 nm is 80% or greater, and the thickness of 1/10 divalent layer of neutron beam generated from Californium 252 is 14cm or less.
(2) The neutron shielding material of (1), wherein the neutron shielding material is a cured product of an epoxy resin composition.
(3) The neutron shielding material of (2), wherein the number density of hydrogen atom of the epoxy resin composition is 6.78 × 10²² atoms/cm³ or more.
(4) The neutron shielding material of (3), wherein the epoxy resin of the epoxy resin composition possesses an alicyclic skeleton.
(5) The neutron shielding material of (4), wherein the epoxy resin possessing an alicyclic skeleton is an epoxy resin obtained by epoxidation of a cyclic olefin.
(6) The neutron shielding material of (4), wherein the epoxy resin possessing an alicyclic skeleton is an epoxy resin obtained by hydrogenation of an aromatic epoxy resin.
(7) The neutron shielding material according to anyone of from (2) to (6), wherein the curing agent of epoxy resin is an amine possessing alicyclic skeleton or an aliphatic amine.
(8) The neutron shielding material according to anyone of from (1) to (7), wherein the neutron shielding material is produced by molding method.

That is, the essential factor of the present invention is a neutron shielding material possessing an epoxy resin and an amine curing agent as essential components, wherein said epoxy resin is an epoxy resin possessing an alicyclic skeleton and an amine curing agent is an alicyclic diamine curing agent.

### EFFECT OF THE INVENTION

The resin composition referring to the present invention has excellent transparency and indicates excellent neutron shielding ability based on high hydrogen atom number density.

### PREFERRED EMBODIMENT OF THE INVENTION

The present invention will be illustrated more in detail.

### <Starting material; epoxy resin>

The epoxy resin used in this invention is an epoxy resin possessing an alicyclic skeleton.

As the epoxy resin possessing an alicyclic skeleton, an epoxy resin selected from a group composed of an epoxy resin obtainable by epoxidation of a cyclic olefin and epoxy resin obtainable by hydrogenation of an aromatic epoxy resin is desirable.

As examples of alicyclic epoxy resin obtained by epoxidation of a cyclic olefin, for example, 3,4 -epoxycyclohexylmethyl-3',4' -epoxycyclohexanecarboxylate 1,2-epoxy-vinylcyclohexene, bis(3,4-epoxycyclohexylmethyl)adipate, 1-epoxyethyl-3,4-epoxycyclohexane, limonenediepoxide, oligomer type alicyclic epoxy resin (product name of Daicel Chemical Industries Ltd.; Epolead GT300, Epolead GT400, EHPE-3150) can be mentioned. Among these products, 3,4-epoxycyclohexylmethyl-3',4'-epoxycyclohexanecarboxy -late is desirable, and by blending this alicyclic epoxy resin, viscosity of epoxy resin composition can be dropped, accordingly, efficiency of work can be improved.

As examples of epoxy resin obtained by hydrogenation of an aromatic epoxy resin, bisphenol A epoxy resins, bisphenol F epoxy resins, 3,3',5,5' -tetramethyl-4,4'-bisphenol epoxy resins, biphenyl epoxy resins such as 4,4'-biphenol epoxy resins, phenol-novolac epoxy resins, cresol-novolac epoxy resins, bisphenol A novolac epoxy resins, naphthalenediol epoxy resins, tris-phenylolmethane epoxy resin, tetrakisphenylolethane epoxy resins or epoxy resins prepared by hydrogenation of aromatic ring of aromatic epoxy resin such as phenoldicyclopentadienenovolac epoxy resins. Among these compounds, bisphenol A epoxy resins, bisphenol F epoxy resins or epoxy resins prepared by hydrogenation of aromatic ring of biphenol epoxy resins are desirable because epoxy resins of high hydrogenation ratio can be obtained by these compounds.

The hydrogenation ratio of hydrogenated epoxy resins obtained by hydrogenation of these aromatic epoxy resins is desirably from 90 to 100%, and more desirably from 95 to 100%. When hydrogenation ratio is smaller than 90%, the resin absorbs short wave length light and deterioration of resin is caused by time elapse, and is not desirable. Said hydrogenation ratio can be measured by finding a change of absorbancy (wave length: 275nm) using an absortiometer.

Above mentioned alicyclic epoxy resins, one kind of it can be used alone or can be used together with other kinds of it.

### <Curing agent>

As a curing agent which is used in the present invention, an amine possessing alicyclic skeleton, specifically a compound represented by following general formula (1) or an aliphatic amine can be desirably used. 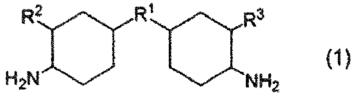 (in the formula, R¹ is one selected from the group consisting of a direct bond, methylene group, -C(CH₃)₂-, -O- or -SO₂-, R² and R³ independently is hydrogen atom or alkyl group of carbon number 1-4) R¹ is one selected from the group consisting of a direct bond, methylene group, -C(CH₃)₂-, -O- or -SO₂-, desirably is methylene group or -C(CH₃)₂-. R² and R³ independently is hydrogen atom or alkyl group of carbon number 1-4 and desirably is alkyl group of carbon number 1-2.

An amine possessing alicyclic skeleton to be used is not specifically restricted, however, for example, 1,2-diaminocyclohexane, 1,4-diaminocyclohexane, hydrogenated orthotoluenediamine, hydrogenated metatoluenediamine, hydrogenated metaxylilenediamine (1,3-BAC), isophoronediamine or isomer thereof, norbornanediamine, 3,3'-diethyl-4,4'-diaminodicyclohexyl-methane can be mentioned, especially 3,3'-diethyl-4,4'-diaminodicyclohexyl-methane is desirable.

As an example of a compound represented by said general formula (1), concretely, 3,3'-dimethyl-4,4'-diaminodicyclohexylmethane, 3,3'-diethyl-4,4' -diaminodicyclohexylmethane, bis(4-amino-3-methyl-5-ethylcyclohexyl) methane, 3,3'-diethyl-4,4'-diaminodicyclohexylmethane or 4,4'-diamino -dicyclohexylmethane can be mentioned, especially 3,3'-dimethyl-4,4' -diaminodicyclohexylmethane is desirable.

As an example of aliphatic amine, diethylenetriamine, triethylenetetramine, tetraethylenepentamine, hexamethylenediamine, metaxylilenediamine, trimethylhexamethylenediamine, 2-methylpenta -methylenediamine, diethylaminopropylamine, polyoxypropylenediamine, polyoxypropylenetriamine or N-aminoethylpiperazine or combination of these compounds can be mentioned.

Further, modified reactant of these polyamines with epoxy resin, modified reactant of polyamines with monoglycidil compound, modified reactant of polyamines with epichlorohydrin, modified reactant of polyamines with alkyleneoxide of carbon number 2-4, amide oligomer obtained by chemical reaction of polyamines with multifunctional compound possessing at least one acyl group or amide oligomer obtained by chemical reaction of polyamines with multifunctional compound possessing at least one acyl group and monovalent carboxylic acid and/or derivative thereof can be used as a curing agent of epoxy resin. Above mentioned amine possessing alicyclic skeleton and aliphatic amine can be used alone or can be used together with.

In the present invention, blending amount of a curing agent for an ordinary temperature curing epoxy resin can be properly selected according to a kind of curing agent, however, generally the blending amount of the curing agent is 10-200 mass parts desirably 20-100 mass parts to 100 mass parts of epoxy resin.

### <Other additives>

The first essential point of the present invention is to reduce the energy which neutrons possess generated by elastic collision of neutron with hydrogen atom, and as a result, is to shield neutrons, that is, neutron causes nuclear reaction with specific nuclide and captured. As a neutron capturing agent, boron is well known.

In the present invention, borate compound can be further added to the epoxy resin to which above mentioned curing agent is blended. Powder of borate compounds represented by B₄C, BN, B₂O₃ and B(OH)₃ can be added within the range not to spoil the effect of the present invention when necessity is arisen.

The shielding effect against γ -ray can be provided by adding boron glass (borosilicate glass) frit as one example of powder of the borate compounds. Regarding boron atom, although the presence of 14 kinds of isotopes of mass number from 6 to 21 is known, the stable isotopes are ¹⁰B and ¹¹B, and natural abundance of each is 18.8% and 80.2%. Neutron causes nuclear reaction with ¹⁰B and captures neutron. For the practical use of the present invention, nature boron compound is desirable from the economical view point. Further, although there are various boron compounds such as oxide, sulfide, nitride or halide, boron glass (borosilicate glass) frit is desirable in the present invention. Boron glass (borosilicate glass) can be obtained by adding boric acid to glass, and softening point and hardness of it are improved. And the term of frit means a powder of glass.

The borosilicate glass frit to be used in the present invention is not restricted, and any kind of product for sealing on the market can be used.

Particle size of the borosilicate glass frit to be used in the present invention is from 0.1µm to 1000pm and desirably from 1µm to 500µm.

When adding amount of borosilicate glass frit is too much the shielding effect will be improved, however, transmittance becomes bad. Therefore, it is necessary to find out proper ratio of addition of the borosilicate glass frit.

Desirable ratio to add borosilicate glass frit is from 0.1 to 13 wt%, and more desirably from 1 to 10 wt%.

Regarding adding method of borosilicate glass frit, there is no restriction, however a method which perform good dispersion state is desirable.

Further, Fe, Ni, Cu, W, Pb or high-density metal powder such as oxide of these metal elements can be used as a γ -ray shielding agent within the range not to spoil the effect of the present invention

To the curable epoxy resin composition of the present invention, other agents such as antioxidant, stabilizer, reactive or nonreactive diluent, plasticizer, mold-releasing agent, flame retardant, pigment or fluorescent substance can be added within the range not to spoil the effect of the present invention when necessity is arisen. Further, for the purpose to improve the physical properties such as thermal expansion coefficiency, hardness or thixotropy, fillers such as silica (fumed silica, colloidal silica or sediment silica) can be added. Regarding a glass, staple fiber glass, filament glass, woven glass fiber or non-woven fiber can be used and not limited by their form. Regarding a kind of glass, any kind of glass such as E glass, T glass, D glass or NE glass can be used.

### <Preparation Method of Molded Product>

In the curing reaction of an epoxy resin composition, it is necessary to cure the product by controlling generated reaction heat. In the present invention, in a case when large amount of inorganic subject of high heat capacity is not added at all, it is indispensable to control and remove surely heat generated by curing reaction at the molding process. If heat of reaction cannot be controlled, molding strain will be caused. Accordingly, deterioration of see through feature originated to ununiformity of the molded product will be caused. Further, in a case when a transparent organic shuttering is used, the shuttering itself is transformed and accordingly the molded product transforms too. Furthermore, bubbles, which become a cause of deterioration of neutron shielding ability, are contained in the molded product and cause serious defect for shielding ability. Such a product cannot be used practically. Accordingly, in the present invention, above mentioned problems are dissolved by following molding method. That is, at the molding process, epoxy resin composition is previously defoamed, the mixture is divided and poured into a shuttering intermittently. Preventing rolling up of bubbles at the bottom of gate of the shuttering, generated heat by curing is removed by outer cooling of the shuttering and performs curing process under ordinary temperature.

Mixing of starting materials: Components to be blended are weighted respectively and mixed. As a mixer to be used for mixing process is not specifically restricted, however, a mixer in which stirring and defoaming can be simultaneously carried out is desirable.

As the typical example, Chemical Mixer, product of Aicohsha Co., Ltd. can be used.

Defoaming: The obtained mixture is defoamed using a specific defoamer. Since the abilities to be required to the molded product of the present invention are neutron shielding ability and light transmissivity, establishment of manufacturing technique to remove bubbles contained in the molded product as much as possible is indispensable. As a defoamer, Vacuum Deforming Apparatus of Otsuka Factory Co., Ltd. can be used. Defoaming time is decided considering data of temperature ascending of reacting heat of the mixture composed of a selected epoxy resin and a curing agent, and curing time.
Ordinary necessary defoaming time is 1 to 120 minutes and practically adjusted to 7-60 minutes.

Molding: Method for molding is not restricted, and a molding method characterizing to form a shuttering according to a shape of necessary molded product and to pour the defoamed mixture to the shuttering can be used. After molded, the shuttering is placed under room temperature and progress the curing reaction sufficiently. By measuring the temperature of the molded product, end point of curing can be detected.

Ordinary necessary curing time is 1 to 168 hours, and practically is 6 to 72 hours.

Estimation of a shielding material can be carried out as follows. Several pieces of specimen of same thickness are prepared and by piling up these specimen, the thickness of the shielding material can be adjusted.

Construction of measuring system. The neutron shielding ability can be measured as follows. Thickness of 1/10 divalent layer can be obtained from neutron shielding ratio calculated by dividing neutron incidence numbers to a shielding material with neutron transmission numbers through the shielding material.

As a neutron beam source, americium 241-Be, americium 241-Li or californium 252 are known, and it is desirable to sham energy spectral of a neutron to be shielded. Especially, regarding californium 252, since radiation dose isostere average energy is 2.40 MeV and energy spectral of neutron indicates Maxwell's distribution, can be used desirably.

For the measurement of neutron, a neutron survey meter on the market can be used.

### Examples

The present invention will be illustrated more in detail by Examples, however, not intended to restrict the present invention to the Examples.

### <Manufacturing method of molded product>

### (First process)

1.7kg of hydrogenate (epoxy equivalent 200g/eq, total chlorine amount 1400ppm) obtained by polycondensation of epoxy resin (Product of Mitsubishi Chemical Corporation Product name: jER YX8000), 4,4'-isopropylidenediphenol with 1-chloro-2,3-epoxypropane, curing agent (Product of Mitsubishi Chemical Corporation Product name: jER cure 113), 4,4'-methylenebis(2-methylcyclohexaneamine), 3,3'-dimethyl-4,4'-diamino dicyclohexylmethane and 0.8kg of laromin C diamine (amine value: 98mgKOH/g) are weighted and stirred for 20 minutes at ordinary temperature (23.7 °C) using a mixer. At the end of stirring process, temperature of the mixture is 27.3°C. This mixture is defoamed by a defoamer for 50 minutes. At the end of defoaming process, temperature of the mixture is 30.6°C. Specifications of mixer and defoamer are mentioned below.

### (1) Chemical mixer

Maker: Aicohsha Co., Ltd.
Type: ACM-30LVT (special specification)
Specification: Originally three phase altering current, 200volt is changed to single phase, 100volt for the purpose to make fine adjustment of rotating number possible at low and middle rotating speed range.
   - Stirrer is biaxial (spiral hook type: SCS13 type)
   - With vacuum defoaming function at stirring process and with specific piping function.

### (2) Defoaming machine

Maker: Otsuka Factory Co., Ltd.
Type: Vacuum defoaming machine corresponding to pail can (with specific piping function.
Specification: 201 pail can corresponding type with a sensor (with chemical mixer connecting function)

### (Second process)

Shuttering for molding (200mm×200mm×20mm) made of transparent acrylic resin board (2mm thickness) is prepared. The mixture obtained by first process is slowly poured into the shuttering obliquely placed on working table with 15 degree angle along with side surface of the shuttering. Pouring is continued by changing the angle horizontally. Above mentioned process is repeated 3 times and all mixture is poured into the shuttering. After pouring process, temperature is measured for 4 times at every 30 minutes and no abnormal phenomenon is detected. After pouring process, the mixture is left for one week and the molded product specimen is obtained.

### <Measurement of neutron shielding effect>

The specimen is a transparent board of 200mm×200mm×20mm. The dose rates of every thickness are measured by piling up the board and the neutron shielding ability is estimated. At 1.2m height position, radiation source and measuring apparatus are placed so as the distance between the radiation source and the measuring center of the measuring apparatus to be 50.8cm. In the case to set the specimen between and not to set the specimen measurement is repeated for 10 times. Shielding ratio is calculated by averaging the values obtained by 10 measurements.

Radiation source is californium 252 (nominal value: 3.7MBq) and Neutron Survey Meter TPS-451 of Aloka Co., Ltd. is used as a measuring apparatus.

Thickness of the specimen that indicates 90% shielding ratio is measured and obtained 12cm thickness of the shielding board of 1/10 divalent layer of a neutron ray.

### <Measurement of light transmissivity >

Spectrophotometer U-2010, which is the product of Hitachi High Tech Science Co., Ltd., is used and light transmissivity is measured based on JISK7361 (Plastic-Determination of the total luminous transmittance of the transparent materials).

Neutron shielding effect of the Example is shown in Table-1.

### Comparative Example 1

1451g of polycondensation product (epoxy equivalent 224g/eq, total chlorine amount 47450ppm) of epoxy resin (ST-3000 of Nippon Steel and Sumikin Chemical Co., Ltd.), 2,2'-bis(4-hydroxycyclohexylpropane) and 1-chrolo-2,3-epoxypropane, curing agent (HL-107 of Nippon Steel and Sumikin Chemical Co., Ltd.) and 581g of denatured heterocyclic diamine are weighted, and molded product of 200mm × 200mm × 50mm molded product is obtained by same process as to Example. Specimen of prescribed thickness is prepared by combining these molded products and provided to the measurement of shielding effect.

Neutron shielding effect of the Comparative Example 1 is shown in Table-2

From above mentioned data, thickness of 1/10-divalent layer is 16cm. Measuring results of light transmissivity are summarized in Table3.

Light transmissivity of the Comparative Example 1 is deteriorated from 500nm (green color), and indicates 79.7% at 450nm and 51.6% at 400nm, that is, transmitted light is largely decreased at blue-violet range and colored to yellowish brown color. On the contrary, in Example, remarkable absorption cannot be observed by 450nm, and at 450nm indicates 84.9%, that is, high transmissivity is maintained. Coloring is not observed by naked eyes of the operator, that is, no colorless and transparent neutron shielding material is obtained.

Density and hydrogen atom number density are mentioned in Table 4. Regarding conventional acrylic board, these values are mentioned for reference.

It is understood from Table4 too that the Example shows higher hydrogen atom number density and superior at neutron shielding effect.

**Table 1**

| Thickness of material (cm) | Shielding ratio (%) |
|---|---|
| 0 | 0 |
| 2 | 32.3 |
| 4 | 56.4 |
| 6 | 70.9 |
| 8 | 80.7 |
| 10 | 86.1 |
| 12 | 90.4 |
| 14 | 92.9 |
| 16 | 95.1 |

**Table 2**

| Thickness of material (cm) | Shielding ratio (%) |
|---|---|
| 0 | 0 |
| 5 | 51.85 |
| 10 | 77.93 |
| 15 | 89.39 |
| 20 | 94.53 |
| 25 | 97.29 |
| 30 | 98.49 |
| 35 | 99.19 |
| 40 | 99.56 |

**Table 3**

| Wave length (nm) | Transmissivity (%) | |
|---|---|---|
| | Example | Comparative Example |
| 800 | 91.3 | 90.0 |
| 750 | 91.1 | 88.8 |
| 700 | 91.3 | 90.4 |
| 650 | 91.2 | 89.9 |
| 600 | 91.2 | 89.3 |
| 550 | 91.0 | 88.2 |
| 500 | 90.7 | 85.7 |
| 450 | 90.1 | 79.7 |
| 400 | 84.9 | 51.6 |
| 350 | 57.7 | 0.5 |
| 300 | 3.4 | 0.5 |
| 250 | 0.1 | 0.2 |

**Table 4**

| | Example | Comparative Example 1 | Reference Example (PMMA) (C₅O₂H₈)n |
|---|---|---|---|
| Density (g/cm³) | 1.06 | 1.13 | 1.18 |
| hydrogen atom number density (atoms/cm³)×10²² | 6.83 | 6.77 | 5.67 |

### Comparative Example 2

Neutron shielding material is prepared by same procedure as to Example 1 except maintained for 24 hours at 40°C after molding process. Transmissivities of the obtained shielding material are shown in Table5.

### Comparative Example 3

Neutron shielding material is prepared by same procedure as to Example1 except maintained for 24 hours at 60°C after molding process. Transmissivities of the obtained shielding material are shown in Table5.

**Table 5**

| Wave length (nm) | Comparative Example 2 40°C cured | Comparative Example 3 60°C cured |
|---|---|---|
| 800 | 90.2 | 90.8 |
| 750 | 89.4 | 90.1 |
| 700 | 90.9 | 91.9 |
| 650 | 90.7 | 91.7 |
| 600 | 90.6 | 91.7 |
| 550 | 90.1 | 91.4 |
| 500 | 88.9 | 90.6 |
| 450 | 86.2 | 87.5 |
| 400 | 72.7 | 59.4 |
| 350 | 23.1 | 6.8 |
| 300 | 0.0 | 0.0 |
| 250 | 0.0 | 0.0 |

### INDUSTRIAL APPLICABILITY

The neutron shielding agent of the present invention has transparency and has high neutron shielding ability, and therefore, is preferably used in various hot laboratories as an excellent neutron shielding material.

## Claims

1. A neutron shielding material whose light transmittance at wavelength of from 400 nm to 700 nm is 80% or greater, and the thickness of 1/10 divalent layer of neutron beam generated from Californium 252 is 14cm or less.

2. The neutron shielding material of claim 1, wherein the neutron shielding material is a cured product of an epoxy resin composition.

3. The neutron shielding material of claim 2, wherein the number density of hydrogen atom of the epoxy resin composition is 6.78 × 10²² atoms/cm³ or more.

4. The neutron shielding material of claim 3, wherein the epoxy resin of the epoxy resin composition possesses an alicyclic skeleton.

5. The neutron shielding material of claim 4, wherein the epoxy resin possessing an alicyclic skeleton is an epoxy resin obtained by epoxidation of a cyclic olefin.

6. The neutron shielding material of claim 4, wherein the epoxy resin possessing an alicyclic skeleton is an epoxy resin obtained by hydrogenation of an aromatic epoxy resin.

7. The neutron shielding material according to anyone of claims 2 to 6, wherein the curing agent of epoxy resin is an amine possessing alicyclic skeleton or an aliphatic amine.

8. The neutron shielding material according to anyone of claims 1 to 7, wherein the neutron shielding material is produced by molding method.
